# EUROPÄISCHE PATENTSCHRIFT

(11) **EP 0 699 713 B1**
(45) Veröffentlichungstag und Bekanntmachung des Hinweises auf die Patenterteilung: **17.11.1999**
(21) Anmeldenummer: 95113007.9
(22) Anmeldetag: 18.08.1995
(51) Int. Cl.: C08L 69/00, C08K 5/00

(54) **Mischungen aus speziellen Dihydroxydiphenyl-cycloalkan-polycarbonaten und Mineralöl**
Compositions of specific dihydroxy-diphenyl-cycloalkane-polycarbonates and mineral oil
Mélange de dihydroxy-diphényle-cycloalcane-polycarbonates spécifiques et d'huile minérale

(30) Priorität: 31.08.1994 DE 4430947
(43) Veröffentlichungstag der Anmeldung: 06.03.1996
(73) Patentinhaber: BAYER AG, 51368 Leverkusen (DE)
(72) Erfinder: Köhler, Burkhard, Dr., D-51373 Leverkusen (DE); Bier, Peter, Dr., D-47800 Krefeld (DE)

(56) Entgegenhaltungen:
- EP-A- 0 359 953
- EP-A- 0 519 098
- EP-A- 0 528 462

## Beschreibung

Die Erfindung betrifft Mischungen aus speziellen Dihydroxydiphenylcycloalkanpolycarbonaten, aliphatischen Kohlenwasserstoffen und gegebenenfalls Terpolymerisaten aus Ethylenacrylaten und Monomeren mit Epoxygruppen.

Erfindungsgemäß geeignete Dihydroxydiphenylcycloalkan-polycarbonate sind bekannt und in der europäischen Patentschrift 395 953 beschrieben. Besonders bevorzugt ist das Polycarbonat auf Basis 1,1-Bis-(4-hydroxyphenyl)-3,3,5-trimethylcyclohexan und das Copolycarbonat dieses Bisphenols und von Bisphenol A.

Diese Polycarbonate zeichnen sich durch eine hohe Wärmeformbeständigkeit aus; ihre Fließfähigkeit, Spannungsrißbeständigkeit und Zähigkeit läßt sich dagegen noch verbessern.

Der Erfindung liegt die Erkenntnis zugrunde, daß die genannten Polycarbonate sich mit aliphatischen Kohlenwasserstoffen wie Mineralöl oder Paraffinöl mischen lassen, daß die Mischungen eine verbesserte Fließfähigkeit bei nur geringer Beeinträchtigung der Wärmeformbeständigkeit zeigen und daß bei zusätzlicher Beimischung von Terpolymerisaten mit Epoxygruppen die Schlagzähigkeit noch weiter ansteigt.

Gegenstand der Erfindung sind Mischungen aus A) 75 bis 99,5 Gew.-%, vorzugsweise 89 bis 97 Gew.-% hochmolekularem, thermoplastischem, aromatischem Polycarbonat mit Molekulargewicht M_{w} (Gewichtsmittel) von mindestens 10.000, vorzugsweise von 20.000 bis 300.000, das bifunktionelle Carbonatstruktureinheiten der Formel (I) enthält, 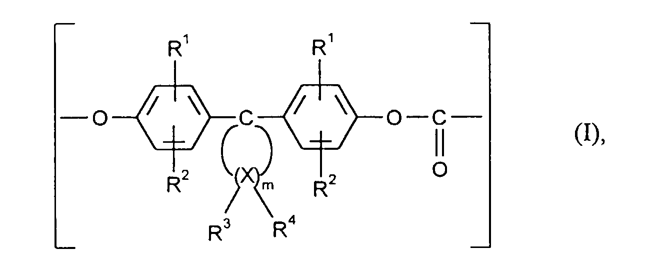 worin
- R¹ und R²: unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: eine ganze Zahl von 4 bis 7, bevorzugt 4 oder 5,
- R³ und R⁴: für jedes X individuell wählbar, unabhängig voneinander Wasserstoff oder C₁-C₆-Alkyl und
- X: Kohlenstoff bedeuten,
mit der Maßgabe, daß an mindestens einem Atom X R³ und R⁴ gleichzeitig Alkyl bedeuten.
B) 0,5 bis 15 Gew.-%, vorzugsweise 3 bis 11 Gew.-% aliphatischem Kohlenwasserstoff mit einem Molgewicht von 300 bis 3.000, vorzugsweise 400 bis 1.500 g/mol (bestimmt durch Ebullioskopie), besonders bevorzugt Mineralöl oder Paraffinöl und
C) 0 bis 11 Gew.-% eines Terpolymerisates aus Ethylen, Acrylat und einem Monomer mit Epoxygruppen.

Die Polycarbonate A) und ihre Herstellung sind Gegenstand des Europäischen Patent 359 953. Die Polycarbonate selbst und ihre Herstellung sind dort ausführlich beschrieben.

Ausgangsprodukte für die Herstellung der Polycarbonate A) sind demnach Dihydroxydiphenylcycloalkane der Formel (Ia) 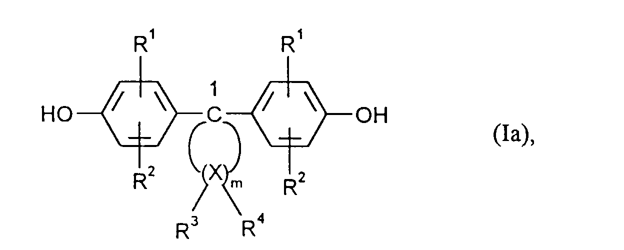 worin
X, R¹, R², R³, R⁴ und m die für die Formel (I) genannte Bedeutung haben.

Bevorzugt sind an 1 bis 2 Atomen X, insbesondere nur an einem Atom X, R³ und R⁴ gleichzeitig Alkyl.

Bevorzugter Alkylrest ist Methyl; die X-Atome in α-Stellung zu dem Diphenylsubstituierten C-Atom (C-1) sind bevorzugt nicht dialkylsubstituiert, dagegen ist die Alkylsubstitution in β-Stellung zu C-1 bevorzugt.

Bevorzugt sind Dihydroxydiphenylcycloalkane mit 5 und 6 Ring-C-Atomen im cycloaliphatischen Rest (m = 4 oder 5 Formel Ia), beispielsweise die Diphenole der Formeln (Ib) bis (Id), 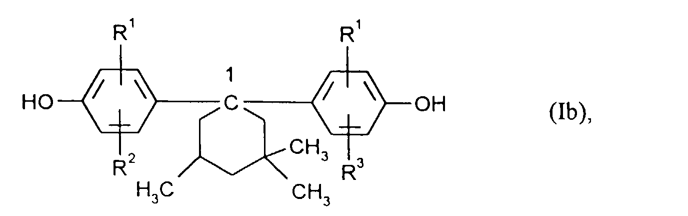 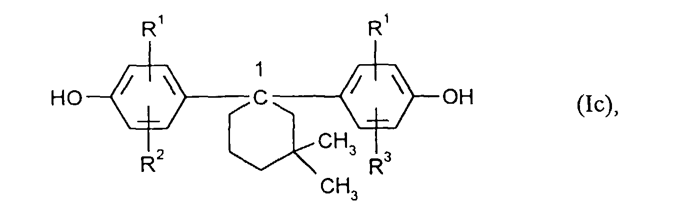 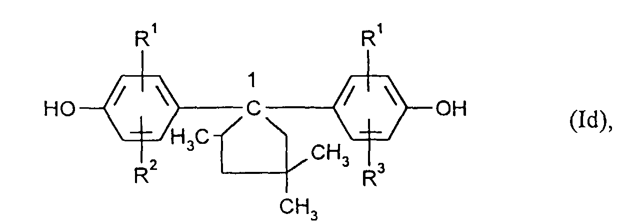 wobei das 1,1-Bis-(4-hydroxyphenyl)-3,3,5-trimethylcyclohexan (Formel Ib mit R¹ und R² gleich H) besonders bevorzugt ist.

Es können sowohl ein Diphenol der Formel (Ia) unter Bildung von Homopolycarbonaten als auch mehrere Diphenole der Formel (Ia) unter Bildung von Copolycarbonaten verwendet werden.

Außerdem können die Diphenole der Formel (Ia) auch im Gemisch mit anderen Diphenolen, beispielsweise mit denen der Formel (Ie)

HO-Z-OH (Ie),

zur Herstellung von hochmolekularen, thermoplastischen, aromatischen Polycarbonaten verwendet werden.

Geeignete andere Diphenole der Formel (Ie) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann.

Bevorzugte andere Diphenole sind beispielsweise:
4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, α,α-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, α,α-Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan.

Besonders bevorzugte Diphenole der Formel (Ie) sind beispielsweise:
2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan. Insbesondere ist 2,2-Bis-(4-hydroxyphenyl)-propan bevorzugt. Die anderen Diphenole können sowohl einzeln als auch im Gemisch eingesetzt werden.

Das molare Verhältnis von Diphenolen der Formel (Ia) zu den gegebenenfalls mitzuverwendenden anderen Diphenolen der Formel (Ie), reicht von 100 Mol-% (Ia) zu 0 Mol-% (Ie) bis 2 Mol-% (Ia) zu 98 Mol-% (Ie), vorzugsweise von 100 Mol-% (Ia) zu 0 Mol-% (Ie) bis 5 Mol-% (Ia) zu 95 Mol-% (Ie) und insbesondere von 100 Mol-% (Ia) zu 0 Mol-% (Ie) bis 10 Mol-% (Ia) zu 90 Mol% (Ie) und ganz besonders von 100 Mol-% (Ia) zu 0 Mol-% (Ie) bis 20 Mol-% (Ia) zu 80 Mol-% (Ie).

Die hochmolekularen Polycarbonate aus den Diphenolen der Formel (Ia), gegebenenfalls in Kombination mit anderen Diphenolen, können nach allen bekannten Polycarbonat-Herstellungsverfahren hergestellt werden. Dabei können die verschiedenen Diphenole sowohl statistisch als auch blockweise miteinander verknüpft sein.

Die Polycarbonate können in an sich bekannter Weise verzweigt sein. Wenn die Verzweigung gewünscht wird, kann sie in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind:

Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1 -Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5-methyl-benzyl)-4-methylphenol, 2-(4-hydroxyphenyl)-2-(2,4-dihydroxylphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl]-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zu an sich bekannten Regelung des Molekulargewichts der Polycarbonate A dienen monofunktionelle Verbindungen in üblichen Konzentraten. Geeignete Verbindungen sind z.B. Phenol, tert.-Butylphenole oder andere Alkyl-C₁-C₇-substituierte Phenole. Zur Regelung des Molekulargewichts sind insbesondere kleine Mengen Phenole der Formel (If) geeignet 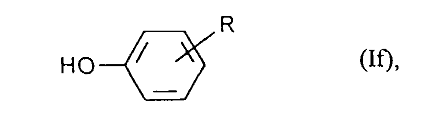 worin
- R: einen verzweigten C₈- und/oder C₉-Alkylrest darstellt.

Bevorzugt ist im Alkylrest R der Anteil an CH₃-Protonen zwischen 47 und 89 % und der Anteil der CH- und CH₂-Protonen zwischen 53 und 11 %; ebenfalls beist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonate A können vorzugsweise nach dem Phasengrenzflächenverhalten (vgl. H. Schnell "Chemistry and Physics of Polycarbonates", Polymer Reviews, Vol. IX, Seite 33 ff., Interscience Publ. 1964) in an sich bekannter Weise hergestellt werden.

Hierbei werden die Diphenole der Formel (Ia) in wäßrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ie), eingesetzt. Zur Regulierung des Molekulargewichts können Kettenabbrecher z.B. der Formel (If) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitverwendeten Verzweiger (bevorzugt 0,05 bis 2,0 Mol-%) können entweder mt den Diphenolen in der wäßrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ie) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ie); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die mitverwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise NaOH-Lösung. Die Herstellung der Polycarbonate A nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden.

Die Polycarbonate A können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden.

Die Polycarbonate A haben bevorzugt Molekulargewicht M_{w} (Gewichtsmittel, ermittelt durch Gelchromatographie nach vorheriger Eichung) von mindesetens 10.000, besonders bevorzugt von 20.000 bis 300.000 und insbesondere von 20.000 bis 80.000.

Die besonders bevorzugten Polycarbonate A sind also solche aus Einheiten der Formel (Ig) 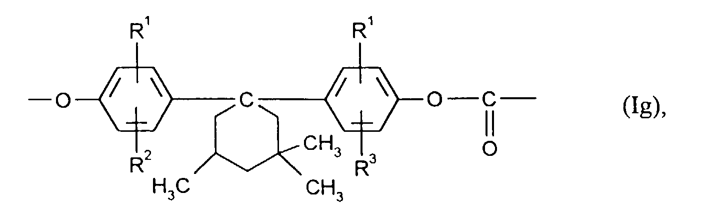 worin R¹ und R² die für Formel (I) genannte Bedeutung haben, besonders bevorzugt aber Wasserstoff, sind.

Durch die beliebige Komposition mit anderen Diphenolen, insbesondere mit denen der Formel (Ie) lassen sich zudem die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders von 100 Mol-% bis 20 Mol-%, bezogen auf die Gesamtmenge von 100 Mol-% an Diphenoleinheiten, in Polycarbonaten enthalten.

Die Mischungen können durch Schmelzmischung der Komponenten in Knetern oder Extrudern bei 220°C bis 380°C oder durch gemeinsames Lösen der Komponenten in geeigneten Lösungsmitteln, wie z.B. Chlorbenzol und/oder Methylenchlorid, und Ausdampfen auf dem Ausdampfextruder hergestellt werden.

Aliphatische Kohlenwasserstoffe B sind verzweigte oder unverzweigte Gemische von im wesentlichen aliphatischen oder cycloaliphatischen Kohlenwasserstoffen, die vorzugsweise flüssig sind und einen Siedepunkt über 360°C aufweisen. Hierzu gehören Mineralöle (vgl. Römpps Chemie Lexikon, Band 4, 8. Aufl., Franckh'sche Verlagshandlung, Stuttgart, Seite 2622) und Paraffinöle (vgl. Römpps Chemie Lexikon, Band 4, 8. Aufl., Franckk'sche Verlagshandlung, Stuttgart, Seite 2991, Stichwort "Paraffin").

Mineralöle, ein spezieller Typ der Kohlenwasserstoffe B, werden durch Hydrierung oder Schwefelsäurebehandlung der über 250°C, vorzugsweise über 350°C siedenden Erdölfraktion gewonnen. Kohlenwasserstoffe B sind auch synthetisch durch Oligomerisierung von Olefinen, vorzugsweise Ether, Propan, Buten-1 oder Isobuten, zugänglich.

Copolymerisate C sind solche aus 55 bis 95 Gew.-% Ethylen, 4 bis 44 Gew.-% Acrylaten und 1 bis 15 Gew.-% epoxyfunktionellen Monomeren, vorzugsweise Glycidylmethacrylat oder Glycidylacrylat.
Besonders bevorzugt sind Terpolymerisate aus Ethylen Butyl- oder 2-Ethylhexylacrylat und Glycidylmethacrylat.

Die erfindungsgemäßen Mischungen lassen sich durch Spritzguß oder Extrusion zu Formkörpern oder Halbzeugen verarbeiten. Die Formkörper finden Verwendung z.B. als Reflektoren für Lampen, Gehäuse für technische Geräte und im Kraftfahrzeugbau (Anwendungen unter der Motorhaube in Motornähe).

Die Mischungen zeichnen sich durch eine gute Fließfähigkeit bei hoher Wärmeformbeständigkeit und vor allem bei Zusatz des Terpolymers, durch eine gute Zähigkeit und Spannungsrißbeständigkeit aus.

### Beispiele

### Beispiel 1

1900 g eines Copolycarbonats aus 65 Mol-% Bisphenol A und 35 Mol-% 1,1-Bishydroxyphenyl-3,3,5-trimethylcyclohexan mit der relativen Lösungsviskosität 1,29 (0,5 % bei 25°C in Methylenchlorid) und 100 g Mineralöl (Mineralöl, white, heavy der Fa. Aldrich) werden in 3 l Chlorbenzol und 8 l Methylenchlorid gelöst und in einem Ausdampfextruder (ZSK 32 mit Vakuumdom) bei 320°C eingedampft. Man erhält eine Mischung mit folgenden Schmelzviskositäten (gemessen bei 320°C):
bei 100 sec⁻¹ 947 Pas / bei 1000 sec⁻¹ 474 Pas / bei 1500 sec⁻¹ 377 Pas.

Die entsprechenden Werte für das Copolycarbonat ohne Mineralöl betragen zum Vergleich 1359 Pas / 594 Pas / 458 Pas.

### Beispiel 2

Man mischt 1800 g Copolycarbonat mit 100 g eines Terpolymeren aus Ethylen, Butylacrylat und Glycidylmethacrylat (Lotader AX 8660® der Fa. CdF) und 100 g Mineralöl. Man erhält eine Mischung mit einer Kerbschlagzähigkeit von 39 kJ/m² (100 % Zähbruch). Ein auf 0,8 % Randfaserdehnung gespannter Stab ist bei 2-minütiger Einwirkung einer Mischung Toluol-Isooctan 1:1 nicht gebrochen (das Copolycarbonat bricht bereits ohne Vorspannung).

### Vergleichsbeispiel 1

Man mischt 1900 g Copolycarbonat mit 100 g Terpolymer. Man erhält eine Mischung, die im Kerbschlagversuch in 20 % der Fälle Sprödbruch zeigt.

## Patentansprüche

1. Mischungen aus
A) 75 bis 99,5 Gew.-%, vorzugsweise 89 bis 97 Gew.-% hochmolekularem, thermoplastischem, aromatischem Polycarbonat mit Molekulargewicht M_{w} (Gewichtsmittel) von mindestens 10.000, vorzugsweise von 20.000 bis 300.000, das bifunktionelle Carbonatstruktureinheiten der Formel (I) enthält, 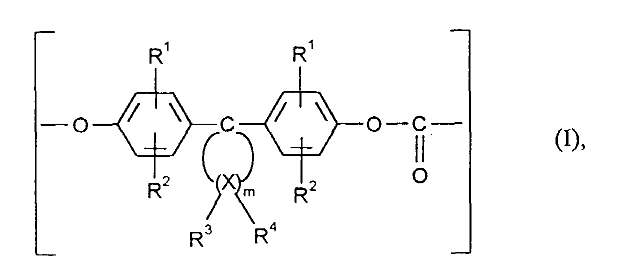 worin
R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
m eine ganze Zahl von 4 bis 7, bevorzugt 4 oder 5,
R³ und R⁴ für jedes X individuell wählbar, unabhängig voneinander Wasserstoff oder C₁-C₆-Alkyl und
X Kohlenstoff bedeuten,
mit der Maßgabe, daß an mindestens einem Atom X R³ und R⁴ gleichzeitig Alkyl bedeuten.
B) 0,5 bis 15 Gew.-%, vorzugsweise 3 bis 11 Gew.-% aliphatischem Kohlenwasserstoff mit einem Molgewicht von 300 bis 3.000, vorzugsweise 400 bis 1.500 g/mol (bestimmt durch Ebullioskopie), besonders bevorzugt Mineralöl oder Paraffinöl und
C) 0 bis 11 Gew.-% eines Terpolymerisates aus Ethylen, Acrylat und einem Monomer mit Epoxygruppen.

## Claims

1. Mixtures of
A) 75 to 99.5 wt.%, preferably 89 to 97 wt.% of a high molecular weight, thermoplastic, aromatic polycarbonate with a molecular weight M_{w} (weight average) of at least 10,000, preferably 20,000 to 300,000, which contains bifunctional carbonate structural units of the formula (I), 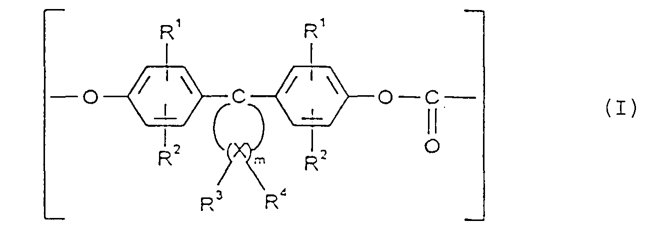 in which
R¹ and R², independently of each other, represent hydrogen, halogen, preferably chlorine or bromine, or a C₁-C₈-alkyl, C₅-C₆-cycloalkyl, C₆-C₁₀-aryl, preferably phenyl, or C₇-C₁₂-aralkyl, preferably phenyl-C₁-C₄-alkyl, in particular a benzyl group,
m is an integer from 4 to 7, preferably 4 or 5,
R³ and R⁴ can be selected separately for each X and, independently of each other, represent hydrogen or a C₁-C₆-alkyl group and
X represents carbon,
with the proviso that R³ and R⁴ simultaneously represent an alkyl group on at least one X atom.
B) 0.5 to 15 wt.%, preferably 3 to 11 wt.% of an aliphatic hydrocarbon with a molecular weight of 300 to 3,000, preferably 400 to 1,500 g/mol. (determined by ebullioscopy), in particular mineral oil or paraffin oil and
C) 0 to 11 wt.% of a terpolymer of ethylene, acrylate and a monomer with epoxy groups.

## Revendications

1. Mélanges constitués
A) de 75 à 99,5% en poids, de préférence de 89 à 97% en poids de polycarbonate aromatique, thermoplastique, de poids moléculaire élevé avec un poids moléculaire M_{w} (poids moyen) d'au moins 10 000, de préférence de 20 000 à 300 000, qui contient des unités structurelles carbonate bifonctionnelles de la formule (I). 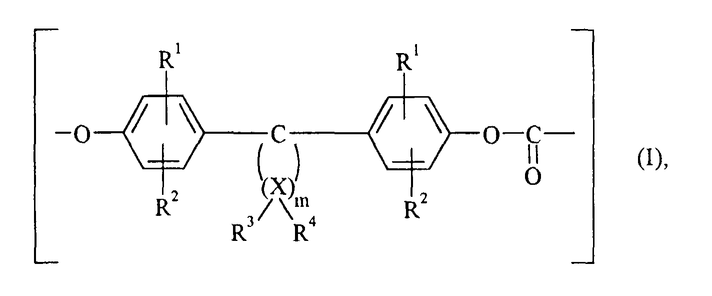 dans laquelle
R¹ et R² représentent indépendamment un atome d'hydrogène, un atome d'halogène, de préférence le chlore ou le brome, un groupe alkyle en C₁-C₈, cycloalkyle en C₅-C₆, aryle en C₆-C₁₀, de préférence phényle, et aralkyle en C₇-C₁₂, de préférence phényl-alkyle en C₁-C₄, en particulier benzyle,
m est un nombre entier de 4 à 7, de préférence de 4 ou de 5,
R³ et R⁴ peuvent être choisis individuellement pour chaque X, représentent indépendamment un atome d'hydrogène ou un groupe alkyle en C₁-C₆ et
X représente un atome de carbone,
à la condition que R³ et R⁴ représentent simultanément un groupe alkyle sur au moins un atome X.
B) de 0,5 à 15% en poids, de préférence de 3 à 11% en poids d'un hydrocarbure aliphatique présentant un poids moléculaire de 300 à 3 000, de préférence de 400 à 1 500 g/mol (déterminé par ébullioscopie), encore mieux d'une huile minérale ou d'huile de paraffine et
C) de 0 à 11% en poids d'un terpolymère d'éthylène, d'acrylate et d'un monomère avec des groupes époxy.
